# EUROPEAN PATENT APPLICATION

(11) **EP 3 687 174 A1**
(43) Date of publication of application: **29.07.2020**
(21) Application number: 19173873.1
(22) Date of filing: 10.05.2019
(51) Int. Cl.: H04N 21/2187, H04N 21/81, H04N 21/439, H04N 21/43, H04N 21/414

(54) **A METHOD OF SYNCHRONIZING PLAYOUT OF A LIVE PERFORMANCE IN A CINEMA IN REAL-TIME**

(30) Priority: 22.01.2019 MY PI2019006306
(71) Applicant: Tan, Bryan Christopher, 58200 Wilayah Persekutuan (MY)
(72) Inventor: Tan, Bryan Christopher, 58200 Wilayah Persekutuan (MY)
(74) Representative: Bittner, Thomas L.

(57) **Abstract**

The present disclosure relates to a method of synchronizing playout of a live performance in a cinema in real-time, particularly, for providing personalized live performances in real-time to audience in cinema. One of the advantages of the method is that it reduces cost and time by connecting to the existing speaker management system of a cinema without any modifications. Furthermore, it significantly reduces the cost of required equipment for a live performance in surround sound or in stereo sound format. In addition, the method creates a cinematic experience, while allowing the audience to enjoy a whole new sound system experience with the favourite artists performing in live and in person.

## Description

The present disclosure herein relates to a method of synchronizing playout of a live performance in a cinema in real-time. Particularly, for providing personalized live performances in real-time to audience in cinema.

### Background

Online videos mobile platform and games with sharing files and downloading files such as NETFLIX, YOUTUBE, SPOTIFY and others are attracting consumers away from watching movies in cinema. Despite numerous attempts to improve the movie going experience, such number dwindling over the years. Hence, many cinemas are underutilized, resulting in financial difficulties for cinema chain owners. Moreover, passive viewing of a concert film at a cinema fails to approach the excitement and immediacy of an in-person live performance.

US6848219 disclosed a modified movie theater having a projection screen, comprising: a digital projector configured to project digital sequences onto the projection screen; a plurality of seats positioned between the projection screen and the digital projector; at least a first support structure positioned at the side of the projection screen; a plurality of special effects systems connected to the first support structure and configured to operate during the projection of the image sequences and, in response to code embedded in digital media associated with the image sequence, in synchronization with the image sequences so as to simulate being present at a live event; and a communal area positioned between the projection screen and the plurality of seats and configured to provide an open space for people to dance. In one embodiment, a method of modifying a movie theater is provided which includes coupling a truss system to a first theater wall, coupling motorized lights to the truss system, coupling a special effects device to the truss system, positioning props in the movie theater, the props corresponding to a video sequence that is to be shown in the movie theater, and synchronizing the motorized lights and the special effects device to data stored in the video sequence. The drawback of this system and method is costly due to high modification of the movie theater with plurality of special effects systems connected to the first support structure and configured to operate during the projection of the image sequences and, in response to code embedded in digital media associated with the image sequence, in synchronization with the image sequences so as to simulate being present at a live event.

Meanwhile, WO2010071620A1 patent application revealed a method for use in digital cinema, comprising: playing out a composition playlist; and synchronizing the playout of the composition playlist with a presentation of a live performer with further comprising: providing a plurality of images in the composition playlist, at least one image having a first component with at least one of size and position that differs from a corresponding component in at least another image; and projecting the plurality of images on the live performer. However, this method did not synchronize playout of a live performance in a digital cinema in real-time.

In view of the above shortcomings, the present invention herein aims to provide a method of synchronizing playout of a live performance in a cinema in real-time. Particularly, for providing personalized and enhanced experience with live performer without any additional cost by connecting to the existing audio and video system such as in a digital cinema. In addition, such system can be conveniently installed and maintained in a simple technical process, low cost with high efficiency and time.

### Summary

The present disclosure provides a method of synchronizing playout of a live performance in a cinema in real-time comprising curating live performance into a surround sound format according to the requirements of the cinema for allowing visuals and images of a live performer projected onto a screen of the cinema; connecting to a speaker management system of the cinema; and providing live performance by a live performer according to the curated surround sound format.

In one embodiment, the method of synchronizing playout of a live performance in a cinema in real-time comprises curating live performance into a stereo sound format according to the requirements of the digital cinema for allowing visuals and images of a live performer projected onto a screen of the cinema; connecting to a speaker management system of the cinema; and providing live performance by a live performer according to the curated stereo sound format.

The method provides to streamline, monitor and effectively improve the personalized and enhanced experience with live performer without any additional cost by connecting to the existing audio and video system in a cinema. By providing a real-time interaction with audience in the cinema, audience can enjoy a cinematic experience with their favourite artists performing in live.

The step of curating live performance further may have a pre-production stage comprising manipulating audio files and imaging files by setting level and panning signals, enhancing a digital effect to achieve clarity and movement of a sound, utilizing a click track via in-ear monitoring of a pre-programmed material to play along with other audio to be played to the audience, predetermining the setting and regions of the pre-programmed material according to a timeline of a song, and syncing videos and images to the hardware of the cinema.

The step of curating live performance further may have a post-production stage comprising creating a live mix of the surround sound by combining a plurality of tracks of songs in a pre-production stage, routing of a digital live mixer in a surround mode to any existing surround sound hardware and real time live mixing on a digital mixing console of the live performer in the cinema.

The real time live mixing on a digital mixing console of live performer in the cinema may further comprise providing a plurality of output audio signals from the live performer and audio interface that are inserted into the digital mixing console via a digital stage box, providing a plurality of output audio signals from the digital mixing console to a speaker management system of the cinema via a digital stage box, and distributing the audio signals by the speaker management system of the cinema to a plurality of amplifiers for powering a plurality of surround sound speakers in the cinema.

A digital audio interface may be provided between the computer and the speaker system of the cinema to allow for conversion of analog to digital files and vice versa.

The step of curating live performance further may have a pre-production stage comprising manipulating audio files and imaging files by setting level and panning signals, enhancing digital effect to achieve clarity and movement of a sound, utilizing a click track via in-ear monitoring of a pre-programmed material to play along with other audio to be played to the audience, predetermining the setting and regions of the pre-programmed material according to a timeline of a song, and syncing videos and images to the hardware of the cinema.

The step of curating live performance further may have a post-production stage comprising creating a live mix of the stereo sound by combining a plurality of tracks of songs in the pre-production stage, routing of a digital live mixer in a surround mode to any existing stereo sound hardware and real time live mixing on a digital mixing console of the live performer in the cinema.

The real time live mixing on a digital mixing console of live performer in the cinema may further comprise providing a plurality of output audio signals from the live performer and audio interface that are inserted into the digital mixing console via a digital stage box, providing a plurality of output audio signals from the digital mixing console to a speaker management system of the cinema via a digital stage box, and distributing the audio signals by the speaker management system of the cinema to a plurality of amplifiers for powering a plurality of stereo sound speakers in the cinema.

A digital audio interface may be provided between the computer and the speaker system of a cinema to allow for conversion of analog to digital files and vice versa.

Further advantages of the system and its application can be derived from the description and the accompanying drawings. The above-mentioned features and those to be further described below can be utilized in accordance with the invention individually or collectively in arbitrary combination. The embodiments mentioned are not to be considered exhaustive enumerations, rather have exemplary character. The invention is shown in the drawings and explained more closely with reference to embodiments.

### Description of Embodiments

The accompanying drawings, which are incorporated in and constitute a part of the specification, illustrate embodiments of the invention and, together with the description, serve to explain the principles of the invention.
- Fig. 1: illustrates a flow chart of the method of synchronizing playout of a live performance in a cinema in real-time.
- Fig. 2: illustrates a flow chart of a post-production stage and connectivity to the cinema equipment of the method of synchronizing playout of a live performance in a cinema in real-time.
- Fig. 3: illustrates a top view and a front view of a preferred stage set-up of cinema for allowing the live performance.
- Fig. 4: illustrates a top view of the artist and band arrangement of the preferred stage set-up of cinema for allowing the live performance.
- Fig. 5: illustrates a top view of a cinema for synchronizing playout of a live performance in real-time.

The present disclosure will now be described in detail in connection with specific embodiments with reference to the accompanying drawings. Unless the context requires otherwise, throughout the specification and claims which follow, the word "comprise" and variations thereof, such as, "comprises" and "comprising" are to be construed in an open, inclusive sense that is as "including, but not limited to". Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments. With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

It is noted that the disclosure may be described as a process which is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

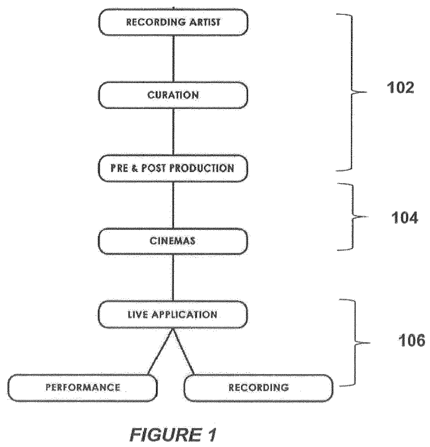

Fig. 1 illustrates a flow chart of the method of synchronizing playout of a live performance in a cinema in real-time. A method of synchronizing playout of a live performance in a cinema in real-time in three simple steps. It begins with curating live performance 102 into a surround sound format according to the requirements of the cinema for allowing visuals and images of a live performer projected onto a screen of the cinema. This is followed by connecting to a speaker management system of the cinema 104 and subsequently providing live performance by a live performer according to the curated surround sound format 106. The step of curating live performance 102 further having a pre-production stage and a post-production stage. The curation process of the live band and artist performances is applied in 5.1 and 7.1 (Surround Sound/360) surround sound format or in a stereo sound format in pluck and play with accompanying visuals and images projected onto screen utilizing existing cinema installations and technology without any modifications.

A live performer such as recording artists whether in solo or a band with commercially published material to adopt to the method of the present disclosure. It is an added advantage that each live performance to be recorded and subsequently to be marketed as an album for live performer to the audience or any interested parties. The method is preferably implemented in a digital cinema. Generally defined, digital cinema refers to the electronic distribution and display of high-quality film programming which has been converted to a digital electronic representation for storage, transmission, and display purposes. Live performance is displayed using cinema-quality electronic projectors featuring high quality digital sound. Digital cinema may comprise the electronic generation, compression, encryption, and storage of audio/visual programming, such as motion pictures in theatre systems, theatres, theatre complexes, and/or other presentation systems. Accordingly, the invention is applicable to the presentation of image and audio information in a variety of locations such as theatre or theatre complex, outdoor amphitheatres, drive-in complexes, civic auditoriums, schools and specialty restaurants. For purposes of the explanation, the invention will be described with reference to a cinema or theatre or theatre complex. However, those skilled in the art will readily understand that the invention may be applied to other types of locations, systems and fields.

The pre-production stage of the method can comprise manipulating audio files and imaging files by setting level and panning signals, enhancing digital effect to achieve clarity and movement of a sound, utilizing a click track via in-ear monitoring of a pre-programmed material to play along with other audio to be played to the audience, predetermining the setting and regions of the pre-programmed material according to a timeline of a song before syncing videos and images to the hardware of the cinema. Among the musical equipments and softwares used during this stage are digital sequencing, a computerised facility used from a DAW (Digital Audio Workstation) i.e.: Digital Performer, Logic Pro X, Protocols. This allows the method to record, manipulate and play audio/sound along a timeline using a choice of available frequencies, bitrate and tempo. Preferably, pre-production stage uses this facility to prepare, manipulate new or pre-recorded audio material and or MIDI (Musical Instrument Digital Interface) for playback in various formats i.e.: Stereo, 5.1, 7.1 etc. In the event that the cinema is not a digital cinema, a digital audio interface (analog to digital converter) is adopted to be used between the computer and the speaker system to allow for conversion of analog to digital files and vice versa in order for the creative process to take place with the experience of audio imaging. This facility used in the pre-production stage is independent from the cinema management system which offers a simple plug and play solution to each live performer such as artists with varied possibilities to enhance their shows and performance.

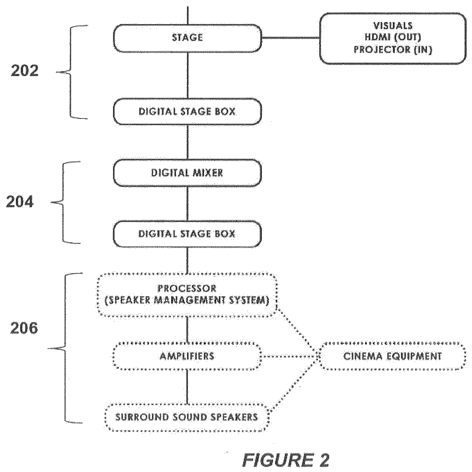

Fig. 2 illustrates a flow chart of a post-production stage and connectivity to the cinema equipment of the method of synchronizing playout of a live performance in a cinema in real-time. The post-production stage begins by creating a live mix of the surround sound by combining a plurality of tracks of songs in the pre-production stage 202, routing of a digital live mixer in a surround mode to any existing surround sound hardware 204 and real time live mixing on a digital mixing console of the live performer in the cinema 206. Meanwhile, the step in the real time live mixing on a digital mixing console of live performer in cinema 206 executing the steps by providing a plurality of output audio signals from the live performer and audio interface are inserted into the digital mixing console via a digital stage box. Then, this follows by providing a plurality of output audio signals from the digital mixing console to a speaker management system of the cinema via a digital stage box. Finally, it distributes the audio signals by the speaker management system of the cinema to a plurality of amplifiers for powering a plurality of surround sound speakers in the cinema.

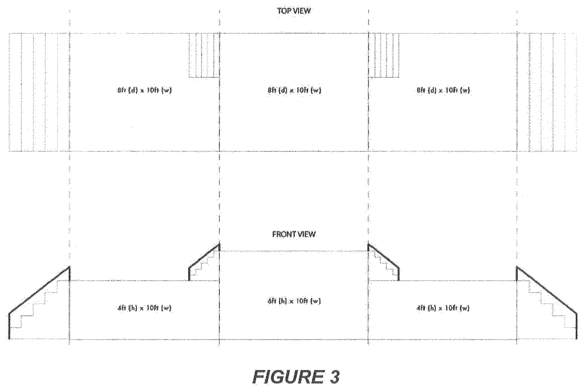

Fig. 3 illustrates a top view and a front view of a preferred stage set-up of cinema for allowing the live performance. It is preferred that a stage is built at a communal area positioned between the projection screen and the plurality of seats and configured to provide an open space for live performer to perform and dance. To achieve the enhancing sound system experiences, it is preferred the stage is built a predetermined height, width and length in accordance to the size of a cinema.

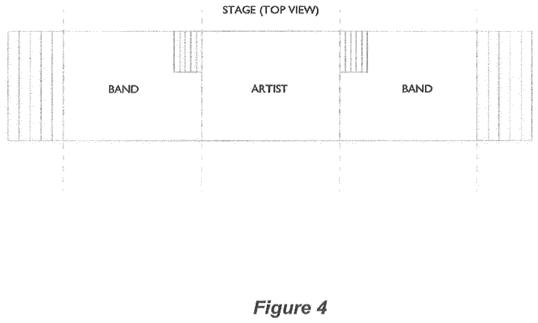

Fig. 4 illustrates a top view of the artist and band arrangement of the preferred stage set-up of cinema for allowing the live performance. All instrument signals from the stage will be channelled for example to the MIDAS M32 mixer via the digital stage box. The output signals from the MIDAS M32 Mixer via XLR connector cables will be connected to the Main Analog Input of the DCM 30D Processor (Speaker Management System) via a 25-pin cable. Hardwired audio signals out of the DCM 30D Processor will be channelled into all amplifiers powering the surround sound speakers (Hardwired).

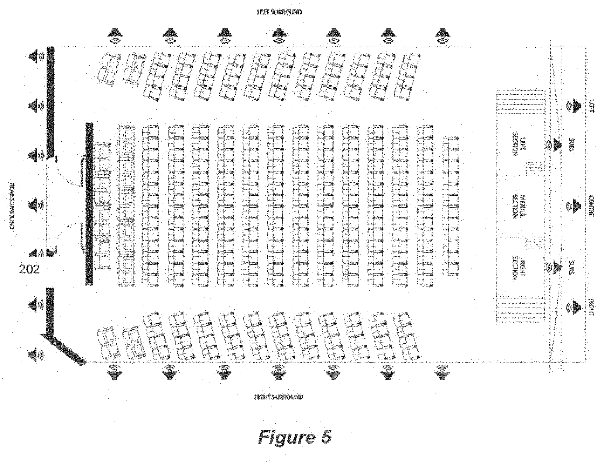

Fig. 5 illustrates a top view of a cinema for synchronizing playout of a live performance in real-time. An example of the pre-production and post-production mixing live in surround sound format of the method connected to the speaker management system set-up in a cinema as illustrated in Table 1.

The method can be configured to enable customers to experience realistic, exciting, in the comfort and safety environment while enjoying the live performance in the cinema. To further enhance the experience, assigned seating may be provided so that consumers do not have to worry about arriving early to get a good seat or be concerned about not sitting together. In addition, concessions typically of a live event are optionally provided. Alternatively, an electronic terminal may be provided at each seat from which customers can order food or other items from a menu displayed on the terminal.

**Table 1**

| **Surround Sound Format 5.1 with 6 outputs** | **Surround Sound Format 7.1 with 8 outputs** |
|---|---|
| 1. Left | 1. Left |
| 2. Right | 2. Right |
| 3. Centre | 3. Centre |
| 4. Left Surround Rear(Lsr) | 4. Left Surround (Lsr) |
| 5. Right Surround Rear(Rsr) | 5. Right Surround (Rsr) |
| 6. LFE (Low Frequency Effects) | 6. Left Surround Side (Lss) |
| | 7. Right Surround Side (Rss) |
| | 8. LFE (Low Frequency Effects) |

| **Speakers & Positioning** | |
|---|---|
| 1. LEFT & RIGHT | |
| Used in general speaker setups and included in surround formats (also known as, "STEREO"). | |

| 2. CENTRE | |
|---|---|
| Positioned in equal distance between LEFT & RIGHT speakers to give the illusion that the sound is coming from the screen. | |

| 3. LEFT SURROUND AND RIGHT SURROUND | |
|---|---|
| Positioned at the back (rear) of the room at a set distance depending on the size of the room. Generally, signals to these outputs are delayed a few milliseconds to give the illusion of space and creates atmosphere. | |

| 4. LEFT SURROUND SIDE AND RIGHT SURROUND SIDE | |
|---|---|
| Positioned at the left and right center/middle of the room. They bring together more detail of movement as you move your material through the outputs, i.e. using a panner that can sweep through all of the speakers moving around the room, and also for special effects (SFX), e.g. like someone walking around you in the room (360 degree). | |

| 5. LOW FREQUENCY EFFECTS | |
|---|---|
| Generally used for low frequent sub effects which enhance material routed to it. Booming sounds, explosions, space craft engines, etc. (gives you the feeling you are in the moment you are seeing or listening to). | |

One of the advantages of the method is that it reduces cost and time by connecting to the existing speaker management system of a cinema without any modifications.

Furthermore, it significantly reduces the cost of required equipment for a live performance in surround sound or in stereo sound format. In addition, the method creates a cinematic experience while allowing the audience to enjoy a whole new sound system experience with the favourite artists performing in live and in person. The method allows the audience to enjoy the enhancing surround sound with live performance indoor without a need to worry any uncertainties due bad weather.

The foregoing detailed description and examples are merely illustrative of the preferred embodiments. They are by no means meant to be the exclusive description of the inventive concept hereby disclosed. It will be recognized by one of ordinary skill in the art that certain aspects of the practice of the invention are readily susceptible to modification or practice by alternative, known means.

## Claims

1. A method of synchronizing playout of a live performance in a cinema in real-time comprising:
- curating live performance into a surround sound format according to the requirements of the cinema for allowing visuals and images of a live performer projected onto a screen of the cinema;
- connecting to a speaker management system of the cinema; and
- providing live performance by a live performer according to the curated surround sound format.

2. The method according to claim 1, wherein the step of curating live performance further has a pre-production stage comprising:
- manipulating audio files and imaging files by setting level and panning signals;
- enhancing a digital effect to achieve clarity and movement of a sound;
- utilizing a click track via in-ear monitoring of a pre-programmed material to play along with other audio to be played to the audience;
- predetermining the setting and regions of the pre-programmed material according to a timeline of a song; and
- syncing videos and images to the hardware of the cinema.

3. The method according to claims 1 or 2, wherein the step of curating live performance further has a post-production stage comprising:
- creating a live mix of the surround sound by combining a plurality of tracks of songs in a pre-production stage, routing of a digital live mixer in a surround mode to any existing surround sound hardware and real time live mixing on a digital mixing console of the live performer in the cinema.

4. The method according to claim 3, wherein the real time live mixing on a digital mixing console of live performer in the cinema further comprises:
- providing a plurality of output audio signals from the live performer and audio interface are inserted into the digital mixing console via a digital stage box;
- providing a plurality of output audio signals from the digital mixing console to a speaker management system of the cinema via a digital stage box; and
- distributing the audio signals by the speaker management system of the cinema to a plurality of amplifiers for powering a plurality of surround sound speakers in the cinema.

5. The method according to at least one of the preceding claims, wherein a digital audio interface is provided between the computer and the speaker system of the cinema to allow for conversion of analog to digital files and vice versa.

6. A method of synchronizing playout of a live performance in a cinema in real-time comprising:
- curating live performance into a stereo sound format according to the requirements of the cinema for allowing visuals and images of a live performer projected onto a screen of the cinema;
- connecting to a speaker management system of the cinema; and
- providing live performance by a live performer according to the curated stereo sound format.

7. The method according to claim 6, wherein the step of curating live performance further has a pre-production stage comprising:
- manipulating audio files and imaging files by setting level and panning signals;
- enhancing digital effect to achieve clarity and movement of a sound;
- utilizing a click track via in-ear monitoring of a pre-programmed material to play along with other audio to be played to the audience;
- predetermining the setting and regions of the pre-programmed material according to a timeline of a song; and
- syncing videos and images to the hardware of the cinema.

8. The method according to claims 6 or 7, wherein the step of curating live performance further has a post-production stage comprising:
- creating a live mix of the stereo sound by combining a plurality of tracks of songs in the pre-production stage, routing of a digital live mixer in a surround mode to any existing stereo sound hardware and real time live mixing on a digital mixing console of the live performer in the cinema.

9. The method according to claim 8, wherein the real time live mixing on a digital mixing console of live performer in the cinema further comprises:
- providing a plurality of output audio signals from the live performer and audio interface are inserted into the digital mixing console via a digital stage box;
- providing a plurality of output audio signals from the digital mixing console to a speaker management system of the cinema via a digital stage box; and
- distributing the audio signals by the speaker management system of the cinema to a plurality of amplifiers for powering a plurality of stereo sound speakers in the cinema.

10. The method according to at least one of the claims 6 to 9, wherein a digital audio interface is provided between the computer and the speaker system of a cinema to allow for conversion of analog to digital files and vice versa.
